# EUROPEAN PATENT APPLICATION

(11) **EP 0 738 803 A1**
(43) Date of publication of application: **23.10.1996**
(21) Application number: 95830154.1
(22) Date of filing: 19.04.1995
(51) Int. Cl.: E02B 3/26

(54) **Assemblage d'éléments modulaires de protection pour le halage et l'amarrage à quai de bateaux**

(71) Applicant: Tine', Carmelo, I-21040 Uboldo (Varese) (IT); Puricelli, Claudio, I-20028 San Vittore Olona (Milano) (IT)
(72) Inventor: Tine,Carmelo, I-21040 - Uboldo Varese (IT); Puricelli,Claudio, I-20028 - San Vittore Olona Milano (IT)
(74) Representative: Cicogna, Franco

(57) **Abstract**

The present invention relates to a modular-element bumper assembly for docking and hauling boats to harbor docks, characterized in that the bumper assembly comprises a resiliently yielding material body (1), which is provided with longitudinal edges (2) to be connected to the vertical wall (3) of a dock and coupled by at least a loop portion (4), which ends at the top thereof with a beveled closure portion (5), the body being provided, at the outer longitudinal edges thereof, with fins (10,11) for connection with adjoining like bodies.

## Description

### BACKGROUND OF THE INVENTION

The present invention relates to a modular element bumper assembly for docking and hauling boats to harbor docks.

As is known, to the side vertical walls of harbor docks are conventionally applied protecting elements, for preventing boats from being damaged as they are docked and hauled.

Prior protecting devices for the above mentioned application usually comprise projecting elements, made of a resilient material, which are applied to the dock vertical walls, in order to operate as abutment member for the boat hulls.

These prior protecting elements, which are arranged at discrete points of the dock, however, do not provide a safe protection since, as a boat is docked, it can impact against regions of the dock which are not protected by the mentioned resilient elements which, moreover, are usually made of a material susceptible to wear strips of which can deposit on the boat hulls.

Another drawback is that the vertical walls of the dock are partially covered, with a consequent anti-aesthetic effect.

### SUMMARY OF THE INVENTION

Accordingly, the aim of the present invention is to overcome the above mentioned drawbacks, by providing a modular element bumper assembly, for docking and hauling boats to harbor docks, which provides a very satisfactory protection for the boats being docked and which, moreover, has a very high resistance to wear and abrasion.

Within the scope of the above mentioned aim, a main object of the present invention is to provide such a bumper assembly which is specifically designed to fully cover the vertical walls of a dock so as to provide, additionally, a very good aesthetic aspect.

Another object of the present invention is to provide such a bumper assembly which is very resistant against the attack of the sea water and is moreover very resistant to ageing and atmospheric agents such as oxygen and ozone.

Yet another object of the present invention is to provide such a bumper assembly which has very good resilient properties so as to suitably protect both the boat hulls and the dock walls.

According to one aspect of the present invention, the above mentioned aim and objects, as well as yet other objects, which will become more apparent hereinafter, are achieved by a modular element bumper assembly, for docking and hauling boats to a harbor dock, characterized in that said bumper assembly comprises a resiliently yielding material body, having longitudinal edges which can be coupled to the vertical wall of a harbor dock and being connected by at least a loop portion, which, at the top thereof, ends with a beveled closure portion, said body, at the outer longitudinal edges thereof, being moreover provided with fins for connection with adjoining like bodies.

### BRIEF DESCRIPTION OF THE DRAWINGS

Further characteristics and advantages of the invention will become more apparent hereinafter from the following detailed disclosure of a preferred, though not exclusive, embodiment of a modular element bumper assembly, for docking and hauling boats to harbor docks, which is illustrated, by way of an indicative, but not limitative, example, in the accompanying drawings, where:

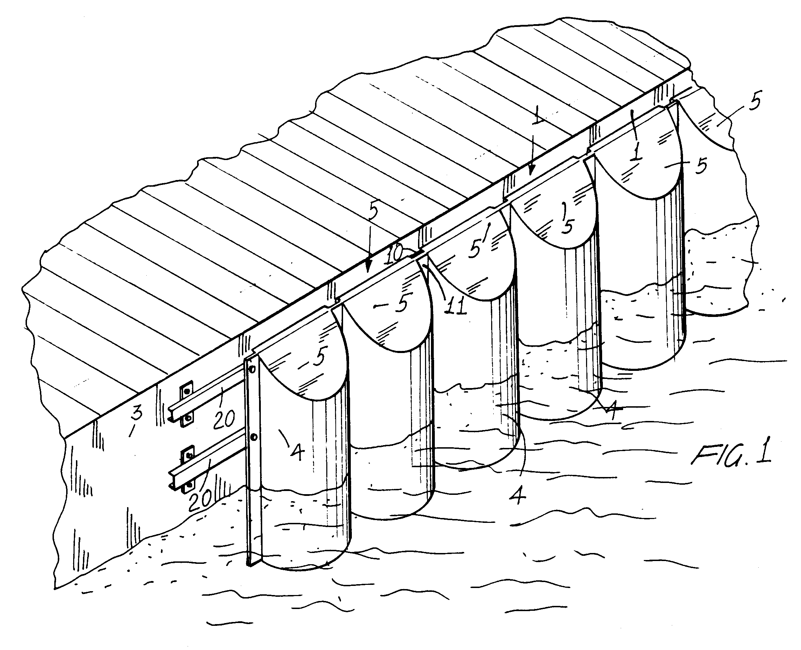

Figure 1 is a schematic perspective view illustrating a bumper assembly made by associating in an adjoining relationship a plurality of modular elements;

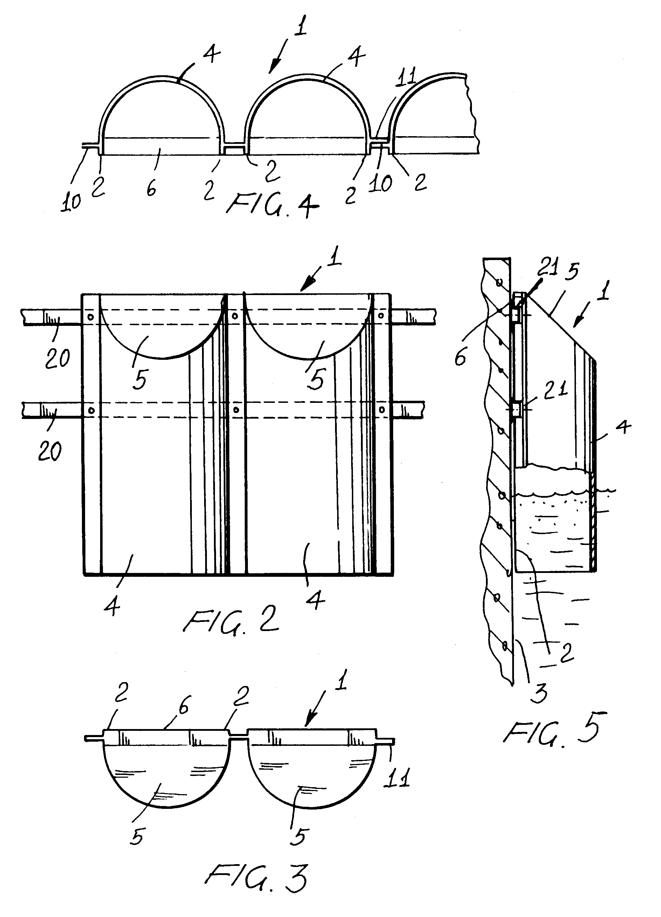

Figure 2 is a front elevation view of a modular element;
Figure 3 is a top plan view of a modular element;
Figure 4 is a bottom plan view of several modular elements to be arranged with an adjoining relationship; and
Figure 5 is a partially cross-sectioned side elevation view of a modular element coupled to a harbor dock.

### DESCRIPTION OF THE PREFERRED EMBODIMENT

With reference to the number references of the above figures of the drawings, the modular element bumper assembly, for docking and hauling boats to harbor docks, according to the present invention, comprises a modular body, generally indicated by the reference number 1, which is made of a resiliently yielding material, preferably high strength polyurethane.

Each modular element is provided with longitudinal edges 2 to be coupled to the vertical wall 3 of a harbor dock. As shown, the longitudinal edges are mutually connected by a loop portion, indicated by 4, which has preferably a semicircumferential arrangement, thereby providing an impact damping construction.

Each loop portion ends, at the top thereof, with a slanted or beveled closure portion 5 and meets with the cross top edge, indicated by 6, to be coupled to the dock.

At the outer longitudinal edges of each modular element are moreover respectively provided, a bottom fin 10, provided on an edge, and a top fin 11, provided on the opposite edge, which allow several modular elements 1 to be arranged with a superimposed and adjoining mutual relationship.

In order to affix the modular elements to the dock, there are provided cross section members, indicated by the reference number 20, and made of steel, which are affixed to the wall 3 so as to engage in cut-outs 21 correspondingly provided on the longitudinal edges.

Thus, a bumper assembly or construction is provided which has a bottom opening facing the water, whereas the top portion is closed thereby, as a boat impacts against the assembly, the air trapped within each modular element is pressurized so as to improve the damping resilient performance of the protecting assembly, to suitably absorb the impact.

If desired, in order to further increase the resilient effect provided by the pressurized air, it is also possible to add a rear wall in order to form an air closed pocket.

From the above disclosure it should be apparent that the invention fully achieves the intended aim and objects.

In particular, the fact is to be pointed out that the provision of a polyurethane modular element allows to obtain a very good stability against the water attack, in addition to providing a very high resistance against very low temperature, and against ageing due to the atmospheric agents, such as oxygen and ozone; moreover, the mentioned materials have a very good flame self-estinguishing properties, thereby it is very suitable for use near fuel delivery stations.

Moreover, the modular element has an indelible color which is not transferred to the boat hull because of impacts and, moreover, is very resistant against abrasion.

The disclosed construction provides moreover very good resilient characteristics, allowing the modular element to quickly reassume its original configuration at the end of the impact.

Another important aspect of the invention is that a full covering of the vertical walls of the dock can be obtained, so as to provide a very good aesthetic aspect.

The invention, as disclosed, is susceptible to several variations and modifications, all of which will come within the scope of the invention.

Moreover, all of the details can be replaced by other technically equivalent elements.

In practicing the invention, the used materials, provided that they are compatible to the intended application, as well as the contingent size and shapes, can be any, according to requirements.

## Claims

1. A modular element bumper assembly, for docking and hauling boats to a harbor dock, characterized in that said bumper assembly comprises a resiliently yielding material body, having longitudinal edges which can be coupled to the vertical wall of a harbor dock and being connected by at least a loop portion, which, at the top thereof, ends with a beveled closure portion, said body, at the outer longitudinal edges thereof, being moreover provided with fins for connection with adjoining like bodies.

2. A bumper assembly, according to Claim 1, characterized in that said body is made of a high strength polyurethane material.

3. A bumper assembly, according to Claims 1 and 2, characterized in that said loop portion has a semicircumferential configuration.

4. A bumper assembly, according to one or more of the preceding Claims, characterized in that said assembly comprises a plurality of bottom fins, provided at one edge, and top fins, provided at the opposite edge, said fins being adapted to be mutually superimposed for adjoining said bodies.

5. A bumper assembly, according to one or more of the preceding Claims, characterized in that said longitudinal edges are provided with cut-outs for engaging therein cross section members to be affixed to the walls of said dock.

6. A bumper assembly, according to one or more of the preceding Claims, characterized in that each modular element comprises a closure wall for providing an air holding pocket in order to resiliently damp the impact stresses from an impacting boat.
